(19) Europäisches Patentamt
European Patent Office
Office européen des brevets

(11) **EP 1 921 463 B1**

(12) **EUROPÄISCHE PATENTSCHRIFT**

(45) Veröffentlichungstag und Bekanntmachung des Hinweises auf die Patenterteilung:
**11.11.2009 Patentblatt 2009/46**

(51) Int Cl.:
*G01S 7/52* *(2006.01)*     *G01S 7/524* *(2006.01)*
*G01S 7/527* *(2006.01)*     *G01S 15/93* *(2006.01)*

(21) Anmeldenummer: **07116431.3**

(22) Anmeldetag: **14.09.2007**

(54) **Verfahren zum Regeln eines Sendeschalldrucks und einer Empfangsverstärkung eines Sensors**

Method for regulating the acoustic pressure in transmission and the reception gain of a sensor

Procédé destiné au réglage de la pression du son emis et de gain pour réception d'un capteur du son

(84) Benannte Vertragsstaaten:
**DE FR GB IT**

(30) Priorität: **10.11.2006 DE 102006053112**

(43) Veröffentlichungstag der Anmeldung:
**14.05.2008 Patentblatt 2008/20**

(73) Patentinhaber: **ROBERT BOSCH GMBH**
**70442 Stuttgart (DE)**

(72) Erfinder:
• **Richter, Karl-Heinz**
**71263 Weil Der Stadt (DE)**
• **Reiche, Martin**
**71263 Weil Der Stadt (DE)**

(56) Entgegenhaltungen:
EP-A- 0 541 856     DE-A1- 10 136 628
DE-A1-102004 023 469     JP-A- 11 103 496

## Beschreibung

Die vorliegende Erfindung betrifft ein Verfahren und eine Vorrichtung zum Regeln eines Sendeschalldrucks und einer Empfangsverstärkung eines Sensors.

Aus der JP 11 103 496 A sind ein Verfahren und eine Vorrichtung zum Verbessern des Sendeschalldrucks und der Empfangsempfindlichkeit eines Ultraschallwandlers bekannt. Diese Verbesserung wird durch Beschalten des Sendepfades mit zusätzlichen Komponenten erreicht.

Die DE 101 36 628 A1 offenbart ein Verfahren zum Betrieb eines Ultraschallwandlers zum Aussenden und Empfangen von Ultraschallwellen mittels einer Membran, wobei der Sendestrom zur Charakterisierung der Membranschwingung und damit des Schalldrucks gemessen wird, wobei auf eine Verkürzung des Membran-Nachschwingens abgezielt wird, welche adaptiv nach Messung des Sendestroms durch entsprechend gegenphasige Anregung erfolgt.

Derartige Sensoren werden insbesondere als Ultraschallsensoren mit einem zugehörigen Steuergerät beispielsweise bei Kraftfahrzeugen als Parkhilfe eingesetzt. Diese Sensoren besitzen einen Ultraschallwandler, der aus einer Piezokeramik aufgebaut ist und in einem Membrantopf eingeklebt ist. Der Sensor ist mit einer Steuereinrichtung ausgerüstet, welche den Betrieb des Ultraschallwandlers in Abhängigkeit von Signalen des übergeordneten Steuergeräts steuert und auch Signalverstärker aufweist. Der Ultraschallsensor wird an Fahrzeugen beispielsweise in den Stoßfängern so eingebaut, dass die von innen mit dem Piezo-Wandler bestückte Außenseite des Membrantopfes als ein Schwingungsabschnitt freiliegt, welcher einerseits vom Ultraschallwandler angeregt Ultraschallwellen aussendet und an Gegenständen in Reichweite reflektierte Ultraschallwellen empfängt und damit den Ultraschallwandler seinerseits zur Erzeugung von korrespondierenden Signalen, welche in einem Empfangsverstärker verstärkt werden, anregt. Dadurch sind Abstandsmessungen zu Objekten vor und hinter dem Fahrzeug und auch zum Teil zur Seite hin möglich.

Die ausgesendeten Ultraschallwellen weisen einen Sendeschalldruck auf, welcher mit einem eingeprägten Sendestrom korreliert. Die Eigenschaft des Ultraschallsensors, reflektierte Ultraschallwellen bis zu einer bestimmten Größe noch zu empfangen, wird als Mikrofonempfindlichkeit bezeichnet. Die Grenze der Mikrofonempfindlichkeit ist das Eingangsrauschen des Empfangsverstärkers des Ultraschallsensors.

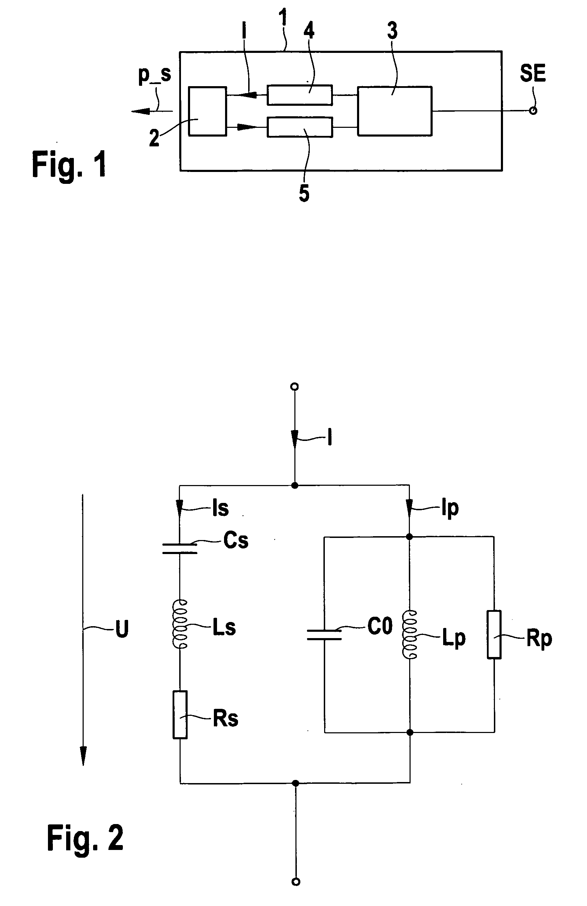

Die Reichweite eines solchen Sensors ist u.a. durch eine mechanische Dämpfung des Sensors bestimmt, die einen dominanten Faktor für die Streuung der Gesamtempfindlichkeit des Sensors bildet. Der Ultraschallwandler wird mittels eines Ersatzschaltbildes (Fig. 2) charakterisiert, das aus einem Serienschwingkreis mit den elektrischen Komponenten Ersatzkapazität Cs, Ersatzinduktivität Ls und Dämpfungswiderstand Rs besteht, die als Ersatz für die mechanischen Eigenschaften des Membranschwingers bzw. Schwingungsabschnitt des Membrantopfes Nachgiebigkeit (= 1/Steife), Masse und Dämpfung darstellen. Die parallel dazu angeschlossene Wandlerkapazität C0 wird in den üblichen Beschaltungen mittels einer Parallelinduktivität Lp und einem Parallelwiderstand Rp zu einem angekoppelten Parallelschwingkreis mit gleicher Resonanz des Serienschwingkreises ergänzt. Die mechanische Dämpfung (Rs) weist in der Fertigung eine bestimmte Streuung auf. Am Ende der Fertigung eines derartigen Sensors wird dieser daher dergestalt bearbeitet, dass durch einen Abgleich sowohl des Sendeschalldrucks über den Sendestrom als auch der Mikrofonempfindlichkeit über die elektronische Empfangsverstärkung die über den Dämpfungswiderstand Rs variierende Gesamtempfindlichkeit des Sensors bei Raumtemperatur abgefangen wird. Dieses hat sich bei einem ausreichenden Signalzu Rauschverhältnis für ein als relevant erachtetes Referenzziel, zum Beispiel ein Stab mit einer Dicke von 1 cm bei einer Entfernung von 80 cm, bewährt.

Der Dämpfungswiderstand Rs kann sich jedoch nach diesem Abgleich während des Sensorbetriebs durch Temperatur ändern, welche u.a. die mechanischen Eigenschaften von Bedämpfungsmaterialien beeinflusst. Weitere bedämpfende Effekte sind äußere Beläge der Membran (zum Beispiel zusätzliche Lackierung, Schmutz). Dies hat zur Folge, dass sich die Gesamtempfindlichkeit bei extremen Temperaturen und über Alterung und/oder Relaxationsprozesse ändern kann.

Ein Ansatz zum Abfangen derartiger Änderungen besteht darin, dass eine Sendestromquelle einen konstanten Sendestrom einprägt. Der Sendestrom teilt sich in einem Stromteiler (Fig. 2) auf, der aus dem seriellen und parallelen Schwingkreis besteht. Die Impedanz des ersteren ändert sich mit dem von der Temperatur abhängigen Dämpfungswiderstand Rs, während die Impedanz des Parallelschwingkreises konstant bleibt. Die Elemente des Parallelschwingkreises sind elektrische Bauelemente und werden in erster Näherung als konstant über der Temperatur angenommen, bzw. deren bekannter Temperaturgang wird kompensiert. Nur der Strom durch den seriellen Schwingkreis ist ursächlich für den Sendeschalldruck. Entsprechend verschiebt sich die Sendestromaufteilung in Abhängigkeit vom Dämpfungswiderstand Rs. Als nachteilig wird hierbei angesehen, dass nur ein begrenztes Abfangen von Änderungen von Rs möglich ist. Die Methode des konstant eingeprägten Sendestroms ist dann erfolgreich, wenn Rs klein gegenüber der Parallelimpedanz ist. Diese Konstellation ist für vorteilhaft ausschwingende Wandler/Sensoren nicht unbedingt gegeben bzw. nicht gut erreichbar.

Ein weiterer Ansatz besteht in einer analogen Regelung des mit dem Sendeschalldruck korrelierenden Sendestroms gemäß der Messgröße einer konstanten Spannungsamplitude. Bei jeder Sendeanregung durch eine Stromquelle wird die Spannungsamplitude über der Last aus seriellem und parallelem Schwingkreis beim Anregungsvorgang über einen zweiten Empfangspfad gemessen und auf die anregende Sendestromquelle zurückgekoppelt. Als nachteilig wird hierbei erachtet, dass bei einer Rückkopplung zur Konstanthaltung der Anregungsspannung über der Last und somit auch über dem Serienschwingkreis dieses für das Erreichen eines vom Dämpfungswiderstand Rs unabhängigen Sendestroms durch den seriellen Schwingkreispfad im Vergleich zur Einprägung eines konstanten Sendestroms kontraproduktiv ist.

OFFENBARUNG DER ERFINDUNG

Das erfindungsgemäße Verfahren zum Regeln eines Sendeschalldrucks und einer einstellbaren Empfangsverstärkung eines Sensors insbesondere eines Ultraschallsensors, weist demgegenüber den Vorteil auf, dass der Sendeschalldruck des Sensors geregelt wird und unabhängig von dem Dämpfungswiderstand Rs ist. Ein weiterer Vorteil besteht darin, dass auch die Empfangsverstärkung des Sensors so geregelt wird, dass eine Kompensation der Abhängigkeit der Sensorreichweite von der Größe des Dämpfungswiderstands Rs (Temperatur-, Alterungs- und Verschmutzungseinfluss) erzielt wird.

Der Kern der Erfindung besteht darin, dass zur Regelung des Sendeschalldrucks der Sendestrom so geregelt wird, dass sein ursächlich für den Sendeschalldruck verantwortlicher serieller Anteil im seriellen Schwingkreis unabhängig von einer aktuellen Bedämpfung (Dämpfungswiderstand Rs) ist. Dementsprechend wird auch die Empfangsverstärkung des Sensors geregelt, da auch im Empfangsbetrieb des Wandlers der Dämpfungswiderstand Rs im seriellen Schwingkreis eine Auswirkung aufweist.

Gemäß der Erfindung werden ein in Anspruch 1 definiertes Verfahren wird eine in Anspruch 8 definierte Vorrichtung geschaffen.

Der Sensor wird anfänglich durch Anregen des Wandlers mit einem vorher festlegbaren Einstellwert des Sendestroms betrieben. Dabei, liefert das indirekte Messen des Sendeschalldrucks des Sensors, welches bevorzugt durch Messen von Amplituden einer Anregungsspannung des Wandlers erfolgt, eine Spannung mit einer Amplitude, deren Wert mit zumindest einem einstellbaren Sollwert verglichen wird. Anhand des Vergleichs wird ein Vergleichswert gebildet, der einen Rückschluss auf eine Veränderung eines Dämpfungswiderstands Rs zulässt. Anhand dieses Vergleichswertes wird jeweils ein Einstellwert zur jeweiligen Einstellung des einstellbaren Sendestroms und der einstellbaren Empfangsverstärkung ermittelt. Dieses erfolgt vorteilhafterweise durch ein nichtlineares progressives Regeln durch Nachführen der Einstellwerte. Dabei wird vorteilhaft ein Regeln des Sendeschalldrucks des Sensors durch Regelung des Sendestroms, dessen ursächlich für den Sendeschalldruck verantwortlicher serieller Anteil den Sollwert für den gewünschten Schalldruck unabhängig von aktuellen Bedämpfungen ist, und ein Regeln der Empfangsverstärkung des Sensors erreicht, die ebenfalls unabhängig von aktuellen Bedämpfungen ist.

Weitere Vorteile und Merkmale sind Gegenstand der Unteransprüche.

In einer bevorzugten Ausführung ist vorgesehen, dass das indirekte Messen des Sendeschalldrucks des Sensors durch Messen von Amplituden einer Anregungsspannung des Wandlers erfolgt. Diese Anregungsspannungsamplituden sind im Sensor an vorhandenen Punkten messbar, wobei das Messen vorteilhafterweise mit vorhandenen Schaltungseinheiten erfolgen kann, die ohnehin für die Funktion des Sensors in seinem bestimmungsgemäßen Betrieb vorgesehen sind.

In einer besonders bevorzugten Ausführung ist vorgesehen, dass das Verfahren während einer Initialisierungsphase des Sensors, die jeweils zeitlich vor einer Betriebsphase des Sensors durchgeführt wird, erfolgt. In einer solchen Initialisierungsphase wird der Sensor im Gegensatz zum üblichen Sendebetrieb vorteilhaft mit einer vorbestimmten, relativ langen Sendeanregung mittels eines Sendestroms betrieben, wobei der Sendeschalldruck problemlos im eingeschwungenen Zustand indirekt durch Messen der Anregungsspannungsamplitude über der Gesamtimpedanz gemessen werden kann. Dabei sind Einschwingvorgänge, die das Messsignal anfänglich verfälschen können, bereits abgeklungen. Die Zeit, welche die Regelung des Sendeschalldrucks benötigt, kann somit vorteilhaft ungeteilt beansprucht werden und muss nicht über mehrere Sendezyklen iterativ erfolgen. Nach dieser Initialisierungsphase wird der Sensor dann für den eigentlichen Sensiervorgang mit dem nunmehr im aktuellen Bedämpfungszustand geregeltem Sendestrom, dessen somit konstant ausgeregelter Anteil im seriellen Ast der Gesamtimpedanz mit dem Sendeschalldruck korreliert, mit vorteilhafter Unabhängigkeit der Reichweite und der Empfangsverstärkung des Sensors von dem aktuellen Bedämpfungszustand betrieben.

In einer weiteren bevorzugten Ausführung erfolgt das Nachführen des einstellbaren Sendestroms durch Einstellen einer einstellbaren Sendestromquelle und das Nachführen der Verstärkung durch Einstellen eines einstellbaren Verstärkers. Dieses ist besonders vorteilhaft, da Schaltungseinheiten verwendet werden, die zur normalen Betriebsfunktion des Sensors aufgrund eines Abgleichs am Bandende seiner Produktion in diesem schon vorhanden sind, was besonders wirtschaftlich ist.

In weiterer bevorzugter Ausführung wird das Einstellen der Empfangsverstärkung als zweite Stellgröße der Regelung vorzugsweise synchron zum Einstellen des Sendestroms ausgeführt. Da der Dämpfungswiderstand Rs des seriellen Schwingkreises auch im Empfangsbetrieb des Sensors in einem Spannungsteiler (dieser Spannungsteiler besteht im Empfangsbetrieb aus dem seriellen Schwingkreis als Quellimpedanz und dem parallelen Schwingkreis als Last) wirksam ist, kann anhand des vorab ermittelten Einstellwertes für den Sendestrom ein entsprechendes Einstellen der Empfangsverstärkung des Sensors zur Erzielung einer vorteilhaften Kompensierung der Mikrofonempfindlichkeit von der aktuellen Bedämpfung erfolgen.

Erfindungsgemäß ist vorgesehen, dass beim Nachführen ein Vergleichen des indirekt gemessenen Sendeschalldrucks des Sensors durch die Messgröße Anregungsspannung mit zumindest einem festlegbaren Sollwert und Bilden eines Vergleichswertes erfolgt, anhand dessen ein Einstellwert zum Einstellen des Sendestroms und ein Einstellwert zum Einstellen der Empfangsverstärkung ermittelt wird.

Das Ermitteln der Einstellwerte kann mittels einer festlegbaren Tabelle, zum Beispiel einer so genannten Lock-Up-Tabelle, iterativ erfolgen. Dadurch wird eine vorteilhaft relativ schnelle Regelung erreicht.

In einer alternativen Ausführung ist vorgesehen, dass das Ermitteln der Einstellwerte analog erfolgt. Daraus ergibt sich der Vorteil einer noch schnelleren Regelung.

In einer weiteren Ausführung wird ein Speichern der Einstellwerte für den Sendestrom und die Empfangsverstärkung in einer Speichereinrichtung ausgeführt. Dieses ist vorteilhaft, da so der zuletzt eingestellte Stromwert für einen nachfolgenden Regelvorgang als Ausgangswert verwendbar ist, wodurch sich eine Zeitersparnis im Regelvorgang ergibt.

Bei der Vorrichtung wird Anspruch 8 ermittelt die Vergleichseinrichtung durch Messung der Anregungsspannung eine Abweichung von der idealen Anregungsspannung, die sich einstellen würde, wenn der Dämpfungswiderstand einen typischen Wert aufweist. Die Abweichung der Anregungsspannung ermöglicht die Bestimmung der Abweichung des Dämpfungswiderstands vom typischen Wert. Dies ist möglich, da alle anderen Parameter der Gesamtimpedanz des Wandlers bekannt sind. Auf Grund dieser bestimmten Abweichung bzw. Vergleichswertes des Dämpfungswiderstands wird ein Einstellwert ermittelt, mit dem die Sendestromquelle so eingestellt bzw. nachgeführt wird, dass sich im seriellen Pfad der Gesamtimpedanz des Wandlers der für den Schalldruck ursächliche serielle Strom trotz eines vom typischen Wert abweichenden Dämpfungswiderstands der Sollwert für diesen seriellen Strom ergibt. Dieser serielle Strom im seriellen Ast der Gesamtimpedanz des Wandlers ist proportional zum Schalldruck, wodurch der Schalldruck vorteilhaft geregelt wird.

Auf Grund des abweichenden Dämpfungswiderstands wird somit vorteilhaft ebenfalls ein Einstellwert für die Nachführung der Empfangsverstärkung ermittelt.

In bevorzugter Ausführung ist vorgesehen, dass die Messeinrichtung einen Spannungsteiler zur Spannungsteilung der zu messenden großen Amplituden einer Anregungsspannung des Wandlers aufweist. Dabei ist es bevorzugt, dass dieser Spannungsteiler hochohmig ausgeführt ist, um vorteilhaft eine Belastung und Verfälschung des seriellen und parallelen Schwingkreises zu vermeiden. Weiterhin ist es durch den Spannungsteiler vorteilhaft mögliche, die zu messende Amplitude an den Eingang und die Signaldynamik der weiterverarbeitenden vorhandenen Schaltungseinheiten anzupassen, so dass diese auch hierzu verwendbar sind.

Dazu ist in weiterer bevorzugter Ausführung vorgesehen, dass die Messeinrichtung einen Umschalter zur Umschaltung von einer Initialisierungsphase des Sensors auf eine Betriebsphase des Sensors aufweist. Damit ist es vorteilhaft möglich, vorhandene Schaltungseinheiten für unterschiedliche Aufgaben zu verwenden, was besonders wirtschaftlich ist.

Weitere Vorteile und Merkmale der Erfindung sind der Beschreibung und den Zeichnungen entnehmbar.

KURZE BESCHREIBUNG DER ZEICHNUNGEN

Die Erfindung wird nachfolgend anhand von in den Figuren der Zeichnung angegebenen Ausführungsbeispielen näher erläutert.

Es zeigt dabei:

FIG. 1 ein schematisches Blockschaltbild eines Sensors;

FIG. 2 ein Ersatzschaltbild eines Wandlers eines Sensors;

FIG. 3 eine grafische Darstellung von Amplituden der Anregungsspannung bei verschiedenen Rs;

FIG. 4 ein Blockschaltbild eines Ausführungsbeispiels einer erfindungsgemäßen Vorrichtung zur Durchführung eines erfindungsgemäßen Verfahrens;

FIG. 5a eine grafische Darstellung einer beispielhaften gemessenen Anregungsspannung im Zusammenhang mit einem aktuellen Dämpfungswiderstand;

FIG. 5b eine grafische Darstellung des aus der Anregungsspannung ermittelten real vorliegenden Ersatzparameters Rs, der die Bedämpfung beschreibt; und

FIG. 5c eine grafische Darstellung eines beispielhaften geregelten Sendestroms über einer gemessenen Anregungsspannung.

AUSFÜHRUNGSFORMEN DER ERFINDUNG

Gleiche oder ähnliche Bauteile mit gleichen oder ähnlichen Funktionen sind in den Figuren mit gleichen Bezugszeichen versehen.

Fig. 1 zeigt ein schematisches Blockschaltbild eines Sensors 1 mit einem Sendeschalldruck p_s im Sendebetrieb.

Der Sensor 1 weist einen Wandler 2, insbesondere einen Ultraschallwandler, eine Steuereinrichtung 3, eine Sendestromquelle 4 und einen Empfangsverstärker 5 auf. Der Wandler 2 ist auf einer Innenseite eines Membrantopfes des Sensors 1 befestigt, deren zugehörige Außenseite einen Schwingungsabschnitt bildet.

Die Steuereinrichtung 3 aktiviert in Abhängigkeit von einem an ihrer, in diesem Beispiel bidirektionalen, Schnittstelle SE anliegenden Signal, von zum Beispiel einem übergeordneten Steuergerät für eine Parkhilfe eines Fahrzeugs, in einem Sendebetrieb einer Betriebsphase des Sensors 1 die Sendestromquelle 4 zur Erzeugung eines Sendestroms I. Der Sendestrom I fließt durch den Wandler 2, welcher den Schwingungsabschnitt zu Ultraschallschwingungen mit einem vom Sendestrom I abhängigen und mit diesem korrelierenden Sendeschalldruck p_s anregt. Diese Ultraschalschwingungen werden außerhalb des Sensors 1 in Ausbreitungsrichtung des Sendeschalldrucks p_s an möglichen Hindernissen reflektiert und in einem Empfangsbetrieb des Sensors 1, auch als Mikrofonbetrieb bezeichnet, von dem Schwingungsabschnitt empfangen und regen den auf diesem an seiner Innenseite befestigten Wandler 2 zur Abgabe von elektrischen Signalen an. Diese elektrischen Signale werden im Empfangsvorverstärker 15 und variablem Verstärker 5 verstärkt und über die Steuereinrichtung 3 an das übergeordnete Steuergerät zur Auswertung weitergeleitet.

Der Wandler 2 kann durch ein Ersatzschaltbild charakterisiert werden, welches in einem Beispiel in Fig. 2 gezeigt ist, was schon teilweise in der Beschreibungseinleitung diskutiert worden ist. In einem linken Zweig ist ein serieller Schwingkreis aus einer Ersatzkapazität Cs, einer Ersatzinduktivität Ls und einem Dämpfungswiderstand Rs gezeigt. In einem rechten Zweig ist ein Parallelschwingkreis mit einer Wandlerkapazität C0, einer Parallelinduktivität Lp und einem Parallelwiderstand Rp in Parallelschaltung an den seriellen Schwingkreis angeschlossen. Die elektrischen Komponenten des seriellen Schwingkreises sind als Ersatz für die mechanische Masse (Ls), die Nachgiebigkeit (Cs) - Nachgiebigkeit=1/Steife - und die Dämpfung (Rs) des Wandlers 2 dargestellt. Der Parallelschwingkreis enthält die Kapazität C0 des Wandlers 2, welche mit der Parallelinduktivität Lp und dem Parallelwiderstand Rp so dimensioniert ist, dass seine Resonanzfrequenz der des seriellen Schwingkreises entspricht. Der Dämpfungswiderstand Rs symbolisiert die mechanische Dämpfung als dominanten Faktor für die Streuung der Gesamtempfindlichkeit und damit der Reichweite des Sensors 1.

Beim Sendebetrieb in der Betriebsphase des Sensors 1 fließt durch den Wandler 2 ein Sendestrom I, der von der Sendestromquelle 4 erzeugt wird. Er teilt sich in einen Serienstrom Is im linken Zweig und in einem Parallelstrom Ip im rechten Zweig auf. Der Dämpfungswiderstand Rs ist unter anderem auch temperaturabhängig, wodurch die Impedanz des seriellen Schwingkreises auch temperaturabhängig ist. Die Impedanz des Parallelschwingkreises bleibt in erster Näherung über der Temperatur konstant bzw. es wird der bekannte Temperaturgang von elektrischen Bauelementen des Parallelschwingkreises geeignet kompensiert. Der Strom Ip im Parallelschwingkreis ist deswegen nicht zwingend konstant. Wenn sich die Impedanz des seriellen Schwingkreises durch ein schwankendes Rs ändert, so ist auf Grund der Stromteilerregel auch der Strom im parallelen Ast veränderlich. Der Serienstrom Is durch den linken, den seriellen Pfad, ist ursächlich für den Sendeschalldruck p_s des Wandlers 2 und somit des Sensors 1. Ziel der Regelung ist es daher, diesen Anteil Is auf eine Sollgröße zu regeln. Eine Spannung U fällt über beiden Schwingkreisen, also der Gesamtimpedanz des Wandlers, im Betrieb des Sensors 1 ab. Sie wird im Sendebetrieb als Anregungsspannung Wandler Uw bezeichnet.

Im Empfangsbetrieb wird diese Spannung als eine Empfangsspannung durch den Wandler 2 aufgrund der von dem Schwingungsabschnitt ihn übertragenen Schwingungen erzeugt. Im Empfangsbetrieb bilden der serielle und der parallele Schwingkreis einen Spannungsteiler im Sinne von Quell- und Lastimpedanz, wobei die Generatorspannung als Quelle im seriellen Ast liegt. Rs bildet dabei den Innenwiderstand dieser Generatorspannungsquelle.

In den Dämpfungswiderstand Rs gehen auch solche Bedämpfungen mit ein, die sich zum Beispiel durch eine Lackierung und Verschmutzung des Schwingungsabschnitts ergeben.

Eine Regelung des Sendeschalldrucks p_s kann somit über den Serienstrom Is erfolgen. Dazu ist es erforderlich, den aktuellen Sendeschalldruck p_s indirekt als eine Messgröße zu erfassen und daraus eine Stellgröße für den Sendestrom I abzuleiten. Dazu soll zunächst der Sendeschalldruck p_s betrachtet werden.

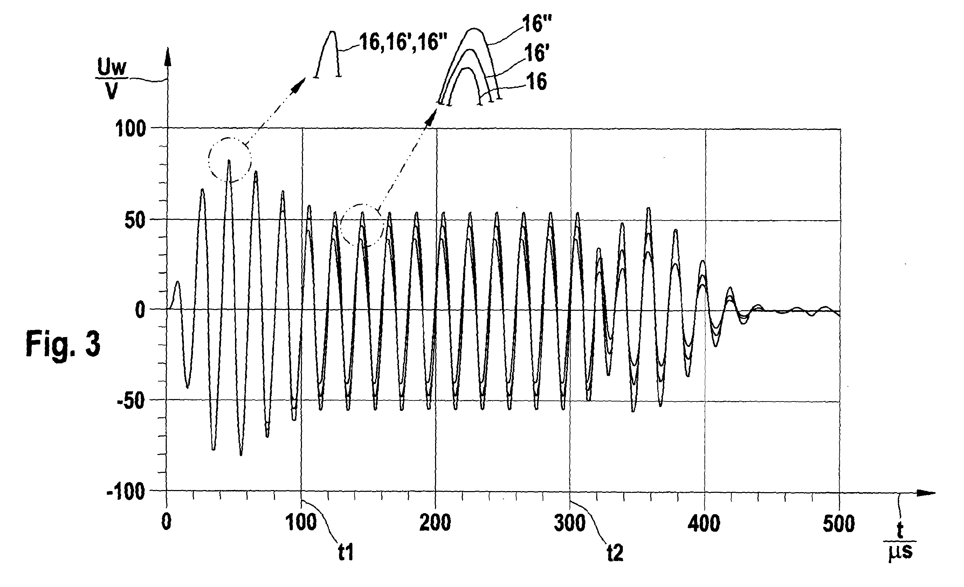

Der Sendeschalldruck p_s ist über eine Amplitude 16, 16', 16" der Anregungsspannung Wandler Uw messbar. Dazu zeigt Fig. 3 eine beispielhafte Darstellung von drei Amplituden 16, 16', 16" der Anregungsspannung Wandler Uw über der Zeit t. Die drei Amplituden 16, 16', 16" gehören in diesem Beispiel zu drei verschiedenen Widerstandswerten von Rs, nämlich gehört Amplitude 16 zu Rs=2kΩ, Amplitude 16' zu Rs=4kΩ und Amplitude 16" zu Rs=6kΩ. Wenn alle anderen Größen der Gesamtimpedanz bekannt sind, ist es somit möglich, von der Anregungsspannung bei bekanntem Sendestrom I auf den real vorhandenen Ersatzwiderstand Rs zu schließen. Die anderen Größen sind bekannt, da es sich um elektrische Bauteile handelt, deren Eigenschaften sich nicht gravierend ändern, bzw. über Temperatur kompensiert sind.

Nach einer begonnenen Anregung durch Einschalten des Sendestroms I mit einem bestimmten Wert erfolgt in der Sendebetriebsphase des Sensors 1 in einem ersten Bereich - in diesem Beispiel von 0 bis t1=100μs - ein Einschwingvorgang mit erhöhter Amplitude, bei welchem eine Scheitelamplitude nahezu unabhängig von Rs ist. Darauf folgt ein eingeschwungener Zustand - in diesem Beispiel von t1 = 100μs bis t2=300μs, in welchem der Unterschied der Amplituden 16, 16', 16" zu unterschiedlichen Rs deutlich sichtbar ist. Beispielsweise beträgt der Unterschied zwischen Amplitude 16 und 16" in diesem Beispiel bis zu 10 V. Bei t2=300μs beginnt in diesem Beispiel ein Abklingvorgang nach Ausschalten der Anregung d.h. des Sendestroms I, in welchem der Wandler in Generatorbetrieb übergeht. Es verbleibt somit ein Zeitabschnitt von ca. 200μs abzüglich einer Unsicherheit zwischen Sendeauslösungstrigger und realer Sendeauslösung zur Vermessung der Amplituden 16, 16', 16", jedoch ist für ein Ausregeln innerhalb dieses Zeitabschnitts innerhalb der Sendeanregung das Wandlersystem zu träge bzw. seine Bandbreite zu gering. Die Sendeanregung repetiert typischerweise mit 30ms, also mit einem Tastverhältnis von ca. 1%, wozu beispielsweise Sample&Hold-Halteglieder zur Erfassung dieser Messgröße (zum Beispiel analoger Spitzenwertgleichrichter) erforderlich sind.

Um das Problem der knapp bemessenen Zeit zur Messgrößenerfassung für eine Regelung des Sendestroms I und somit des Sendeschalldrucks p_s zu umgehen, wird vorteilhaft eine längere Sendedauer während der Initialisierung des Sensors 1 vor jeder Betriebsphase genutzt.

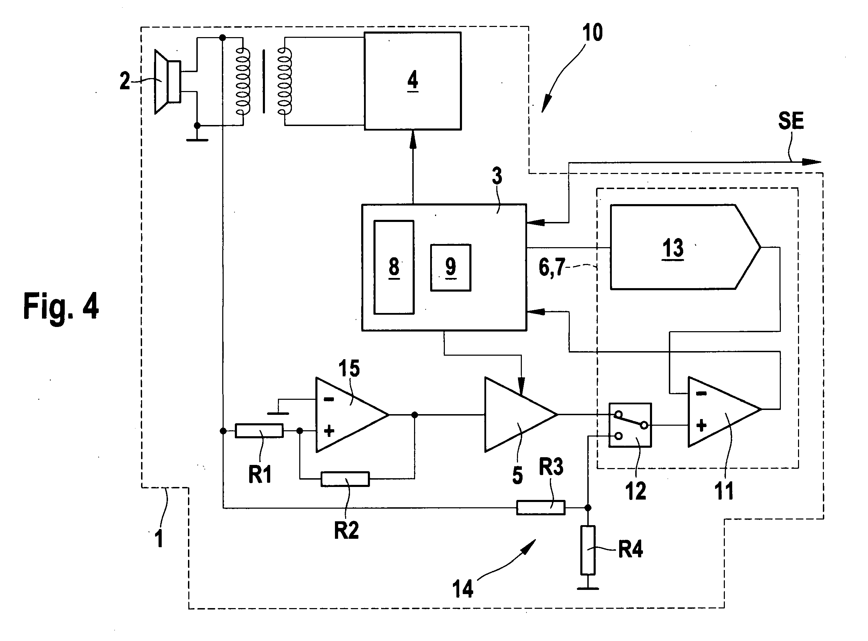

In der Initialisierungsphase des Sensors 1 bei Aktivierung der Parkhilfe eines Fahrzeugs überträgt das dazugehörige Steuergerät ein Protokoll über die bidirektionale Schnittstelle SE, in dem die Höhe von Schwellwerten sowie ihre zeitliche Lage in einem Bitstrom an den Sensor 1 übergeben und im Sensor 1 in einer Speichereinrichtung 8 (Fig. 4) abgelegt werden. Diese Übertragung dauert in diesem Beispiel ca. 50ms. In dieser Zeit kann eine lange Sendeanregung mit einem mittleren Sendestrom (zum Beispiel 300mA) über mehrere 100 Millisekunden erfolgen, in der problemlos die Amplitude 16, 16', 16" im eingeschwungenen Zustand gemessen werden kann. Im Vergleich zu dieser Messzeit sind die Ein- und Ausschwingvorgänge irrelevant.

Die Vermessung der Amplitude 16, 16', 16" kann unter Ausnutzung vorhandener technischer Mittel der im Sensor 1 vorhandenen Steuereinrichtung 3, zum Beispiel ein ASIC, erfolgen, welche ohnehin für seine Funktion notwendig sind, wie beispielsweise für einen Abgleich am Bandende der Produktion. Ein mögliches Ausführungsbeispiel einer erfindungsgemäßen Vorrichtung 10 zur Durchführung eines erfindungsgemäßen Verfahrens zum Regeln des Sendeschalldrucks p_s und einer Empfangsverstärkung des Sensors 1 zeigt Fig. 4 in einem beispielhaften Blockschaltbild.

Die Vorrichtung 10 weist Folgendes auf: den Wandler 2; die Steuereinrichtung 3 mit der Speichereinrichtung 8 und einer Stelleinrichtung 9, die zum Beispiel ein steuerbarer Halbleiter ist; eine Sendestromquelle 4, einen Vorverstärker 15; einen einstellbaren Verstärker 5; eine Messeinrichtung 6; und eine Vergleichseinrichtung 7. Alle diese Komponenten sind in diesem Beispiel Schaltungsbestandteile des Sensors 1.

Die Steuereinrichtung 3 ist über die bidirektionale Schnittstelle SE mit dem übergeordneten Steuergerät (nicht gezeigt) der Parkhilfe des Fahrzeugs verbunden. Ein weiterer Eingang ist am Ausgang eines Komparators 11 angeschlossen. Ein Ausgang der Steuereinrichtung 3 ist mit der Sendestromquelle 4, die über einen Übertrager an dem Wandler 2 angeschlossen ist, verbunden, ein weiterer Ausgang mit dem einstellbaren Verstärker 5, welcher mit dem Vorverstärker 15 in Verbindung steht. Der Wandler 2 ist über einen Widerstand R1 mit dem Vorverstärker 15 verbunden und an einem Spannungsteiler 14 aus einem Widerstand R3 und R4 angeschlossen. Der Spannungsteiler 14 seinerseits ist mit einem Eingang eines Umschalters 12 verbunden, dessen anderer Eingang am Ausgang des einstellbaren Verstärkers 5 angeschlossen ist. Ein Ausgang des Umschalters 12 steht mit einem negativen Eingang eines Komparators 11 in Verbindung, dessen positiver Eingang mit dem Ausgang eines Digital-Analog-Umsetzers 13 verbunden ist. Der Digital-Analog-Umsetzer 13 ist mit der Steuereinrichtung 3 verbunden und erhält von dieser die über die Flugzeit variablen Schwellwerte. Der Ausgang des Komparators 11 führt auf die Steuerschaltung 3.

Die Messeinrichtung 6 besteht aus dem Umschalter 12, dem Komparator 11 und dem Digital-Analog-Umsetzer 13 und dem Spannungsteiler 14. Der Komparator 11 ist in diesem Beispiel gleichzeitig die Vergleichseinrichtung 7.

Das erfindungsgemäße Verfahren wird anhand der Fig. 2 bis 4 erläutert.

In einer Initialisierungsphase des Sensors 1 übergibt das Steuergerät (nicht gezeigt) der Parkhilfe ein Protokoll an die Steuereinrichtung 3, wobei Schwellwerte in deren Speichereinrichtung 8 gespeichert werden. Dieses ist für die normale Funktion des Sensors 1 erforderlich. In diesem Zeitraum der Initialisierung wird die Sendestromquelle 4 von der Steuereinrichtung 3 über die Stelleinrichtung 9 mit einem Signal beaufschlagt, um den Wandler 2 des Sensors 1 für einen vorbestimmten Zeitabschnitt mit einem ersten festlegbaren Sendestrom I anzusteuern. Am Wandler 2 wird die Amplitude 16, 16', 16" abgegriffen, welche auf R1 und R3 geleitet wird. Der Pfad über R1 ist in dieser Sendephase nicht relevant und wird weiter unten erläutert. Am Spannungsteiler 14 wird ein abgeschwächtes Signal der Amplitude 16, 16', 16" auf den Umschalter 12 gelegt, welcher in der in Fig. 4 nicht gezeigten unteren Schaltstellung das Signal auf den negativen Eingang des Komparators 11 führt. Der Spannungsteiler 14 ist vorzugsweise hochohmig, um den Wandler 2 nicht zu belasten. Das abgeschwächte Signal ist nun für die Weiterverarbeitung in dieser abgeschwächten Form für die weiteren Schaltungseinheiten vorteilhaft einfach angepasst. Der Komparator 11 vergleicht dieses Signal mit einem Wert, den der Digital-Analog-Umsetzer 13, zum Beispiel aus den in der Speichereinrichtung 8 abgelegten Schwellwerten, generiert. Dieser Schwellwert ist zum Beispiel der Sollwert, den die Amplitude 16, 16', 16" bei dem ersten festlegbaren Sendestrom I einnehmen sollte. Ist das Signal der Amplitude 16, 16', 16" beim Komparator 11 ungleich dem Sollwert, so wird die Steuereinrichtung 3 über den Komparatorausgang veranlasst, den Sendestrom, je nach ausgefallenem Vergleich, so einzustellen, dass sich wieder ein Sollwert für den Strom Is im seriellen Ast ergibt. Dieses erfolgt dadurch, dass anhand der Abweichung der gemessenen Amplitude 16, 16', 16" von der idealen Amplitude bei typischem Rs ein Wert für den einzustellenden Strom I ermittelt wird, beispielsweise iterativ oder über eine Tabelle in der Software. Damit ist der Sendestrom I so eingestellt, dass im seriellen Pfad der Gesamtimpedanz der Strom Is trotz des vom typischen Wert abweichenden Ersatzwiderstands Rs sich der Sollwert für diesen Strom Is ergibt. Dieser sich ergebende Strom Is im seriellen Ast ist proportional zum Schalldruck p_s. Der dem Sollwert nun entsprechende Einstellwert für den Sendestrom I wird in der Speichereinrichtung 8 gespeichert und bei der Sendebetriebsphase des Sensors 1 als Sendestrom I verwendet. Hierbei ist der aktuelle Bedämpfungszustand des Wandlers 2 in die Einstellung des Sendestroms I mit eingeflossen. Dieser Zustand ist der gleiche, welcher im darauf folgenden Sendebetrieb des Sensors 1 noch vorherrscht. Dadurch ist der Sendestrom I und somit der Sendeschalldruck p_s durch den seriellen Anteil Is des Gesamtsendestroms I des Sensors 1 geregelt. Für einen nachfolgenden Regelvorgang werden die gespeicherten Werte als Ausgangswerte benutzt.

In der Empfangsbetriebsphase des Sensors 1 befindet sich der Umschalter 12 in der in Fig. 4 gezeigten Stellung. Das vom Wandler 2 nun erzeugte Empfangssignal wird über den Vorverstärker 15 mit einer durch die Widerstände R1 und R2 fest eingestellten Verstärkung vorverstärkt und dem einstellbaren Verstärker 5 zugeführt. Die Verstärkung des einstellbaren Verstärkers 5 wird nun im Empfangsbetrieb der Betriebsphase des Sensors mit dem zuvor ermittelten Einstellwert eingestellt und somit ebenfalls geregelt. So wird das empfangene Signal optimal dem aktuellen Bedämpfungszustand gemäß kompensiert und verstärkt dem Komparator 11 zugeleitet, der nun in seiner üblichen Funktion als Bauteil des Sensors 1 das Empfangssignal an die Steuereinrichtung 3 weitergibt, die es über die bidirektionale Schnittstelle SE dem übergeordneten Steuergerät zuleitet.

In einer weiteren Ausführung kann die Veränderung des Sollwertes auch als Folge von Sollwerten in einer Referenzkennlinie abgespeichert sein. Diese Referenzkennlinie wird durchfahren, bis der Komparator 11 seinen Ausgangszustand wechselt. Über die dabei verstrichene Zeit ist damit die Amplitude der Sendeanregung bei einem mittleren Sendestrom I bekannt. Aus einer Lock-Up-Tabelle in der Speichereinrichtung 8 wird dann die zu dieser Amplitude notwendige Größe des Sendestroms I bzw. für seine Einstellung ermittelt. Auf diese Weise ist es möglich, dass zu einer gemessenen Amplitude 16, 16', 16" sofort ein entsprechender Einstellwert für den Sendestrom I zugeordnet werden kann.

Die einstellbare Sendestromquelle 4 als Stellglied der Regelschleife ist im Design des ASIC vorhanden und wird im Stand der Technik am Ende der Produktion des Sensors, zum Beispiel durch ein so genanntes Zapping irreversibel eingestellt. Dieses kann durch die vorliegende Erfindung umgangen werden, da das erfindungsgemäße Verfahren immer eine aktuelle Einstellung des Sendestroms I und somit des Sendeschalldrucks p_s liefert. Das gleiche gilt für die Empfangsverstärkung des einstellbaren Verstärkers 5.

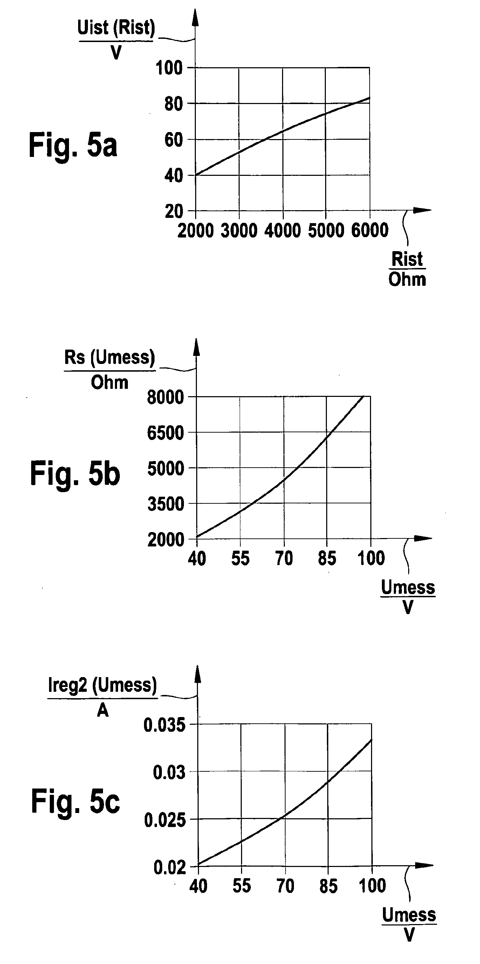

Im Folgenden wird (mit Bezug auf Fig. 5a bis c und zum Teil mit Bezug auf Fig. 2) eine Reglerübertragungsfunktion für das erfindungsgemäße Verfahren an einem Beispiel hergeleitet. Die Reglerübertragungsfunktion ist eine progressive Regelfunktion:

$$Ireg2(Umess) = Iq\_soll \cdot \frac{Rp + \dfrac{Rp}{\dfrac{Usoll}{Umess} \cdot \left(1 + \dfrac{Rp}{Rsoll}\right) - 1}}{Rp + Rsoll}$$

$$(1)$$

Mit:
(Idealzustand)
Rsoll := 4000 Ohm Mittelwert der Verteilung von Rs bei Raumtemperatur
Iq_soll := 0,024 A eingeprägter Gesamtsendestrom in kompensiertem Wandler 2 bei Messkalibrierung mit einem Wandler von Rs = 4000 Ohm

Rp := 8000 Ohm in der Beschaltung vorgesehener Parallelwiderstand

$$Isoll := \frac{Rp \cdot Iq\_soll}{Rp + Rsoll},$$

$$(2)$$

wobei

Is_soll = 0,016 A dieser Anteil des Sendestrom Is soll durch den seriellen Pfad fließen, unabhängig vom Wert Rs des Wandlers.

$$Usoll := \frac{Rp \cdot Rsoll}{Rp + Rsoll} \cdot Iq\_soll,$$

$$(3)$$

wobei

Usoll = 64 V im Idealzustand für ein typisches Rs von 4000 Ohm über dem kompensierten Wandler 2 abfallende Spannung bei Kalibrierung

Rist := 2000, 2100...6000 Ohm abweichender, real vorhandener Rs, z.B. durch Produktionsstreuung oder Temperatur-einfluss auf Bedämpfung

$$Uist(Rist) := \frac{Rp \cdot Rist}{Rp + Rist} \cdot Iq\_soll$$

im Realzustand über dem kompensierten Wandler abfallende Spannung durch Rist abweichend von Usoll (4)

Hierzu zeigt Fig. 5a eine grafische Darstellung einer beispielhaften gemessenen Anregungsspannung Uist im Zusammenhang mit einem aktuellen Dämpfungswiderstand Rist. Dabei liegt in diesem Beispiel die gemessene Anregungsspannung Uist im Bereich von 40 bis 100 V und wird weiterhin als Umess verwendet.

Aus Umess ermittelt sich der reale Dämpfungswiderstand Rs:

$$Rs(Umess) = \frac{Rp}{\frac{Usoll}{Umess} \cdot \left(1 + \frac{Rp}{Rsoll}\right) - 1} \qquad (5)$$

Dazu zeigt Fig. 5b eine grafische Darstellung der gemessenen Anregungsspannung die vom Dämpfungswiderstand Rs abhängig ist.

Der zu regelnde Gesamtsendestrom Ireg2 wird zu dem Sendesollstrom Iqsoll ins Verhältnis gesetzt:

$$\frac{Ireg2(Umess)}{Iqsoll} = \frac{Rp + Rs(Umess)}{Rp + Rsoll}$$

$$(6)$$

Mit Einsetzen von (5) in (6) ergibt sich die Übertragungsfunktion (1).

$$Ireg2(Umess) = Iq\_soll \cdot \frac{Rp + \dfrac{Rp}{\dfrac{Usoll}{Umess} \cdot \left(1 + \dfrac{Rp}{Rsoll}\right) - 1}}{Rp + Rsoll}$$

$$(1)$$

In Fig. 5c ist dieser Zusammenhang von Ireg2 und Umess grafisch dargestellt. Zum Beispiel beträgt bei einer in diesem Beispiel gemessenen Spannung (Amplitude 16, 16', 16") Umess = 55 V der einzustellende Sendestrom I etwa 0,022 A. Der Sollwert des durch den seriellen Pfad (Fig. 2) fließenden Stroms Is beträgt 0,016A. Das heißt, dass der Sendestrom I von ursprünglich 0,024A durch das Verfahren auf den Wert von 0,022A abzusenken ist, um die aktuellen Bedämpfungen, die sich in der gemessenen Spannung Umess (Amplitude 16, 16', 16") darstellen, abzufangen. Daraus ergibt sich, dass bei einem Wert von Rs, der niedriger als der typische Wert von 4000 Ohm ist, auch ein erniedrigter Sendestrom I benutzt werden kann, um weiterhin im seriellen Ast einen konstanten Strom Is von 0,016A zu gewährleisten. Durch die Erniedrigung des Sendestroms I auf 0,022A sinkt die Anregungsspannung auf 51,4 V und wird nicht auf einen konstanten Wert ausgeregelt.

Diese nichtlineare progressive Reglerfunktion (1) wird als Software in der Steuereinrichtung 3 des Sensors 1 implementiert. Die Steuereinrichtung 3 ist vorteilhafterweise mit ausreichendem Programmspeicherplatz hierzu ausgerüstet.

So kann das erfindungsgemäße Verfahren auf eine Störgröße während des Betriebs des Sensors 1 schon in der Initialisierungsphase reagieren und immer eine aktuelle optimale Sendeschalldruckgröße p_s liefern. Dieses erfolgt vorteilhaft mit einem anspruchslosen Messverfahren unter Einsatz gegebener und ohnehin implementierter Schaltungseinheiten im Sensor 1.

Die Erfindung ist nicht auf die oben beschriebenen Ausführungsbeispiele beschränkt, sondern auf vielfältige Art und Weise modifizierbar.

So ist es beispielsweise möglich, dass in einem Arbeitspunkt der Gradient der Reglerfunktion (1) durch Ableitung bestimmt werden kann, und damit statt einer nicht linear progressiven auch eine einfache lineare Regelung aufgesetzt werden, die sich wie folgt darstellt:

$$\Delta Ireg = \Delta Umess \cdot \left[\frac{dIreg}{dUmess}\right]_{Arbeitspunkt}$$

Weiterhin ist es möglich, mit Hilfe des Digital-Analog-Wandlers digitale Sollwerte in Analogwerte zu konvertieren und eine analoge Regeleinrichtung für eine schnelle analoge Regelung zu verwenden.

**Patentansprüche**

1. Verfahren zum Regeln eines Sendeschalldrucks (p_s) und einer einstellbaren Empfangsverstärkung eines Sensors (1), insbesondere eines Ultraschallsensors mit einem Wandler (2), wobei das Verfahren folgende Verfahrensschritte aufweist:

   (S1) Betreiben des Sensors (1) durch Anregen des Wandlers (2) mit einem einstellbaren Sendestrom (I);
   (S2 Indirektes Messen des Sendeschalldrucks (p_s) des Sensors (1) mittels einer Messeinrichtung (6); und
   (S3) Regeln des Sendeschalldrucks (p_s) und der einstellbaren Empfangsverstärkung des Sensors (1) durch nichtlineares progressives oder einfaches lineares Regeln, wobei das Regeln des Sendeschalldrucks (p_s) mittels Nachführen des einstellbaren Sendestroms(I) erfolgt und wobei das Regeln der einstellbaren Empfangsverstärkung mittels Nachführen der einstellbaren Empfangsverstärkung anhand des Resultats des indirekten Messens des Sendeschalldrucks (p_s) des Sensors (1) erfolgt, wobei
   beim Regeln des Sendeschalldrucks (p_s) und des einstellbaren Empfangsverstärkung des Sensors (1) ein Vergleichen des indirekt gemessenen Sendeschalldrucks (p_s) des Sensors (1) mit zumindest einem festlegbaren Sollwert und Bilden eines Vergleichswertes erfolgt, anhand dessen ein Einstellwert zum Nachführen des einstellbaren Sendestroms (I) und ein Einstellwert zum Nachführen der einstellbaren Empfangsverstärkung ermittelt wird,
und wobei
ein Speichern der ermittelten Einstellwerte zum Nachführen des einstellbaren Sendestroms (I) und der einstellbaren Empfangsverstärkung in einer Speichereinrichtung (8) erfolgt.

2. Verfahren nach Anspruch 1,
**dadurch gekennzeichnet,**
**dass** das Betreiben des Sensors (1) mit einem vorher festlegbaren Initialwert oder mit einem ausgehend vom letzten Betriebszustand ermittelten Wert des einstellbaren Sendestroms (I) erfolgt.

3. Verfahren nach Anspruch 1 oder 2,
**dadurch gekennzeichnet,**
**dass** das indirekte Messen des Sendeschalldrucks (p_s) des Sensors (1) durch Messen von Amplituden (16, 16', 16") einer Anregungsspannung (Uw) des Wandlers (2) erfolgt.

4. Verfahren nach einem der Ansprüche 1 bis 3,
**dadurch gekennzeichnet,**
**dass** das Verfahren während einer Initialisierungsphase des Sensors (1) jeweils zeitlich vor einer Betriebsphase des Sensors (1) durchgeführt wird.

5. Verfahren nach einem der Ansprüche 1 bis 4,
**dadurch gekennzeichnet,**
**dass** das Nachführen des einstellbaren Sendestroms (I) durch Einstellen einer einstellbaren Sendestromquelle (4) und das Nachführen der einstellbarenEmpfangsverstärkung durch Einstellen eines einstellbaren Verstärkers (5) erfolgt.

6. Verfahren nach Anspruch 1,
**dadurch gekennzeichnet,**
**dass** das Ermitteln der Einstellwerte zum Nachführen des einstellbaren Sendestroms (I) und der einstellbaren Empfangsverstärkung mittels zumindest einer festlegbaren Tabelle iterativ erfolgt.

7. Verfahren nach Anspruch 1,
**dadurch gekennzeichnet,**
**dass** das Ermitteln der Einstellwerte zum Nachführen des einstellbaren Sendestroms (I) und der einstellbaren Empfangsverstärkung analog erfolgt.

8. Vorrichtung (10) zur Regelung eines Sendeschalldrucks (p_s) und einer einstellbaren Empfangsverstärkung eines Sensors (1), insbesondere eines Ultraschallsensors mit einem Wandler (2), mit einer einstellbaren Sendestromquelle (4), einem einstellbaren Verstärker (5) und einer Stelleinrichtung (8), welche eine Steuereinrichtung (3) umfaßt, wobei die Vorrichtung (10) Folgendes aufweist:

- eine Messeinrichtung (6) zur indirekten Messung des Sendeschalldrucks (p_s) des Sensors (1);
- eine Vergleichseinrichtung (7) zum Vergleich des indirekt gemessenen Sendeschalldrucks (p_s) mit zumindest einem festlegbaren Wert und zur Bildung eines Vergleichswertes zur jeweiligen Ermittlung eines Einstellwertes für die Einstellung eines einstellbaren Sendestroms der einstellbaren Sendestromquelle (4) und für die Einstellung einer einstellbaren Verstärkung des einstellbaren Verstärkers (5);
- eine Speichereinrichtung (8) zur Speicherung von festlegbaren Werten, und
- eine Stelleinrichtung (8) zur Einstellung der einstellbaren Sendestromquelle (4) mittels des ermittelten Einstellwertes zur Regelung des Sendeschalldrucks (p_s) und zur Einstellung der einstellbaren Verstärkung des Verstärkers (5) mittels des ermittelten Einstellwertes zur Regelung der einstellbaren Empfangsverstärkung des Sensors (1).

9. Vorrichtung (10) nach Anspruch 8,
**dadurch gekennzeichnet,**
**dass** die Messeinrichtung (6) zur indirekten Messung des Sendeschalldrucks (p_s) einen Spannungsteiler (14) zur Spannungsteilung von gemessenen Amplituden (16, 16', 16") einer Anregungsspannung (Uw) des Wandlers (2) aufweist.

**10.** Vorrichtung (10) nach Anspruch 9,
**dadurch gekennzeichnet,**
**dass** der Spannungsteiler (14) hochohmig ausgebildet ist.

**11.** Vorrichtung (10) nach einem der Ansprüche 8 bis 10,
**dadurch gekennzeichnet,**
**dass** die Messeinrichtung (6) zur indirekten Messung des Sendeschalldrucks (p_s) einen Umschalter (12) zur Umschaltung von einer Initialisierungsphase des Sensors (1) auf eine Betriebsphase des Sensors (1) aufweist.

**Claims**

**1.** Method for regulating a transmission sound pressure (p_s) and a variable reception gain of a sensor (1), in particular an ultrasonic sensor with a converter (2), the method having the following method steps:

(S1) operating the sensor (1) by exciting the converter (2) with a variable transmission current (I);
(S2) indirectly measuring the transmission sound pressure (p_s) of the sensor (1) by means of a measuring device (6); and
(S3) regulating the transmission sound pressure (p_s) and the variable reception gain of the sensor (1) by means of non-linear progressive regulation or simple linear regulation, the transmission sound pressure (p_s) being regulated by tracking the variable transmission current (I), and the variable reception gain being regulated by tracking the variable reception gain using the result of the indirect measurement of the transmission sound pressure (p_s) of the sensor (1),

the indirectly measured transmission sound pressure (p_s) of the sensor (1) being compared with at least one determinable desired value and a comparison value being formed when regulating the transmission sound pressure (p_s) and the variable reception gain of the sensor (1), said comparison value being used to determine a setting value for tracking the variable transmission current (I) and a setting value for tracking the variable reception gain, and the determined setting values for tracking the variable transmission current (I) and the variable reception gain being stored in a memory device (8).

**2.** Method according to Claim 1,
**characterized in that**
the sensor (1) is operated with a predeterminable initial value or with a value of the variable transmission current (I), which value is determined on the basis of the last operating state.

**3.** Method according to Claim 1 or 2,
**characterized in that**
the transmission sound pressure (p_s) of the sensor (1) is indirectly measured by measuring amplitudes (16, 16', 16") of an excitation voltage (Uw) of the converter (2).

**4.** Method according to one of Claims 1 to 3,
**characterized in that**
the method is carried out during an initialization phase of the sensor (1), in each case before an operating phase of the sensor (1) in terms of time.

**5.** Method according to one of Claims 1 to 4,
**characterized in that**
the variable transmission current (I) is tracked by setting a variable transmission current source (4) and the variable reception gain is tracked by setting a variable amplifier (5).

**6.** Method according to Claim 1,
**characterized in that**
the setting values for tracking the variable transmission current (I) and the variable reception gain are determined iteratively using at least one determinable table.

**7.** Method according to Claim 1,
**characterized in that**

the setting values for tracking the variable transmission current (I) and the variable reception gain are determined in an analogue manner.

8. Apparatus (10) for regulating a transmission sound pressure (p_s) and a variable reception gain of a sensor (1), in particular an ultrasonic sensor with a converter (2), a variable transmission current source (4), a variable amplifier (5) and an adjusting device (8) which comprises a control device (3), the apparatus (10) having the following:

   - a measuring device (6) for indirectly measuring the transmission sound pressure (p_s) of the sensor (1);
   - a comparison device (7) for comparing the indirectly measured transmission sound pressure (p_s) with at least one determinable value and for forming a comparison value for respectively determining a setting value for setting a variable transmission current of the variable transmission current source (4) and for setting a variable gain of the variable amplifier (5);
   - a memory device (8) for storing determinable values, and
   - an adjusting device (8) for setting the variable transmission current source (4) by means of the determined setting value for regulating the transmission sound pressure (p_s) and for setting the variable gain of the amplifier (5) by means of the determined setting value for regulating the variable reception gain of the sensor (1).

9. Apparatus (10) according to Claim 8,
   **characterized in that**
   the measuring device (6) for indirectly measuring the transmission sound pressure (p_s) has a voltage divider (14) for the voltage division of measured amplitudes (16, 16', 16") of an excitation voltage (Uw) of the converter (2).

10. Apparatus (10) according to Claim 9,
    **characterized in that**
    the voltage divider (14) has a high impedance.

11. Apparatus (10) according to one of Claims 8 to 10,
    **characterized in that**
    the measuring device (6) for indirectly measuring the transmission sound pressure (p_s) has a changeover switch (12) for changing over from an initialization phase of the sensor (1) to an operating phase of the sensor (1).

**Revendications**

1. Procédé de régulation de la pression sonore d'émission (p_s) et d'un amplificateur réglable de réception d'une sonde (1), en particulier d'une sonde à ultrasons dotée d'un convertisseur (2), le procédé présentant les étapes suivantes :

   (S1) alimentation de la sonde (1) par excitation du convertisseur (2) par un courant d'émission réglable (I),
   (S2) mesure indirecte de la pression sonore d'émission (p_s) de la sonde (1) au moyen d'un dispositif de mesure (6) et
   (S3) régulation de la pression sonore d'émission (p_s) et de l'amplification réglable de réception de la sonde (1) par régulation progressive non linéaire ou régulation linéaire simple,

   la régulation de la pression sonore d'émission (p_s) s'effectuant par suivi du courant d'émission réglable (I), la régulation de l'amplification réglable de réception s'effectuant par suivi de l'amplification réglable de réception au moyen de résultat de la mesure indirecte de la pression sonore d'émission (p_s) de la sonde (1),
   la régulation de la pression sonore d'émission (p_s) et de l'amplification réglable de réception de la sonde (1) s'effectuant en comparant la pression sonore d'émission (p_s) de la sonde (1) mesurée indirectement à au moins une valeur de consigne définie et en formant une valeur de comparaison à l'aide de laquelle une valeur de réglage permettant de suivre le courant d'émission réglable (I) et une valeur de réglage permettant de suivre l'amplification réglable de réception sont déterminées,
   les valeurs de réglage déterminées pour le suivi du courant d'émission réglable (I) et de l'amplification réglable de réception étant conservées dans un dispositif de mémoire (8).

2. Procédé selon la revendication 1, **caractérisé en ce qu'**une valeur initiale préalablement définie ou une valeur du courant réglable d'émission (I) déterminée à partir du dernier état de fonctionnement sont appliquées sur la sonde (1).

**3.** Procédé selon les revendications 1 ou 2, **caractérisé en ce que** la mesure indirecte de la pression sonore d'émission (p_s) de la sonde (1) s'effectue par mesure des amplitudes (16, 16', 16") de la tension d'excitation (Uw) du convertisseur (2).

**4.** Procédé selon l'une des revendications 1 à 3, **caractérisé en ce que** le procédé est exécuté pendant une phase d'initialisation de la sonde (1) qui précède chaque phase de fonctionnement de la sonde (1).

**5.** Procédé selon l'une des revendications 1 à 4, **caractérisé en ce que** le suivi du courant réglable d'émission (I) s'effectue par réglage d'une source réglable de courant d'émission (4) et le suivi de l'amplification réglable de réception par réglage d'un amplificateur réglable (5).

**6.** Procédé selon la revendication 1, **caractérisé en ce que** la détermination des valeurs de réglage pour le suivi du courant réglable d'émission (I) et de l'amplification réglable de réception s'effectue itérativement au moyen d'au moins un tableau défini.

**7.** Procédé selon la revendication 1, **caractérisé en ce que** la détermination des valeurs de réglage pour le suivi du courant réglable d'émission (I) et de l'amplification réglable de réception s'effectue de manière analogique.

**8.** Dispositif (10) de régulation de la pression sonore d'émission (p_s) et d'un amplificateur réglable de réception d'une sonde (1), en particulier d'une sonde à ultrasons qui présente un convertisseur (2), une source réglable de courant d'émission (4), un amplificateur réglable (5) et un dispositif de réglage (8) qui comprend un dispositif de commande (3), le dispositif (10) présentant les caractéristiques suivantes :

- un dispositif de mesure (6) qui mesure indirectement la pression sonore d'émission (p_s) de la sonde (1),
- un dispositif de comparaison (7) qui compare la pression sonore d'émission (p_s) mesurée indirectement à au moins une valeur définie et qui forme une valeur de comparaison pour déterminer chaque valeur de réglage en vue du réglage d'un courant d'émission réglable de la source réglable de courant d'émission (4) et en vue du réglage d'une amplification réglable de l'amplificateur réglable (5),
- un dispositif de mémoire (8) qui conserve des valeurs définies et
- un dispositif de réglage (8) qui règle la source réglable du courant d'émission (4) au moyen de la valeur de réglage déterminée en vue de réguler la pression sonore d'émission (p_s) et qui règle l'amplification réglable de l'amplificateur (5) au moyen de la valeur de réglage déterminée en vue de réguler l'amplification réglable de réception de la sonde (1).

**9.** Dispositif (10) selon la revendication 8, **caractérisé en ce que** le dispositif de mesure (6) qui mesure indirectement la pression sonore d'émission (p_s) présente un diviseur de tension (14) qui divise la tension des amplitudes mesurées (16, 16', 16") de la tension d'excitation (Uw) du convertisseur (2).

**10.** Dispositif (10) selon la revendication 9, **caractérisé en ce que** le diviseur de tension (14) a une résistance ohmique élevée.

**11.** Dispositif (10) selon l'une des revendications 8 à 10, **caractérisé en ce que** le dispositif de mesure (6) qui mesure indirectement la pression sonore d'émission (p_s) présente un commutateur (12) qui assure le basculement entre une phase d'initialisation de la sonde (1) et une phase de fonctionnement de la sonde (1).

**Fig. 1**

**Fig. 2**

Fig. 3

**Fig. 4**

$\dfrac{\text{Uist (Rist)}}{\text{V}}$

Fig. 5a

100
80
60
40
20
2000 3000 4000 5000 6000

$\dfrac{\text{Rist}}{\text{Ohm}}$

$\dfrac{\text{Rs (Umess)}}{\text{Ohm}}$

Fig. 5b

8000
6500
5000
3500
2000
40 55 70 85 100

$\dfrac{\text{Umess}}{\text{V}}$

$\dfrac{\text{Ireg2 (Umess)}}{\text{A}}$

Fig. 5c

0.035
0.03
0.025
0.02
40 55 70 85 100

$\dfrac{\text{Umess}}{\text{V}}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11103496 A

- DE 10136628 A1